# EUROPÄISCHE PATENTANMELDUNG

(11) **EP 0 623 533 A1**
(43) Veröffentlichungstag der Anmeldung: **09.11.1994**
(21) Anmeldenummer: 94106800.9
(22) Anmeldetag: 01.05.1994
(51) Int. Cl.: B65G 37/02

(54) **Verfahren und Fördereinrichtung zum Transportieren von Werkstückträgern**

(30) Priorität: 07.05.1993 CH 1418/93
(71) Anmelder: BIBUS AG, CH-8126 Zumikon (CH)
(72) Erfinder: Zindel, Jacques, CH-8805 Richterswil (CH)
(74) Vertreter: Althoff, Gerhard

(57) **Zusammenfassung**

Es wird ein verfahren zum Transportieren von Werkstückträgern (55) sowie eine Fördereinrichtung (150) zur Durchführung des Verfahrens vorgeschlagen, bei welchem Verfahren die Werkstückträger (55) mittels angetriebener Schleppbänder durch geradlinige sowie umlenkende Transportbewegungen mindestens einem der Fördereinrichtung (150) zugeordneten Handarbeitsplatz (1 bis 3) und/ oder mindestens einer Automatikstation (5 bis 9) zugeführt werden.

Die Fördereinrichtung (150) umfasst in Längs- und Querrichtung orientierte und durch Umlenkeinheiten (30 bis 47) miteinander verbundene Lineareinheiten (10 bis 27), wobei die Umlenkeinheiten (30 bis 47) derart ausgebildet sind, dass die einzelnen zugeführten Werkstückträger (55) in Abhängigkeit des Bestimmungsortes programmgesteuert darin geradlinig weitertransportiert oder in bezug zu der geradlinigen Transportbewegung mittels vorgesehener Steuerschieber unter spitzem Winkel ausgelenkt der nächsten Lineareinheit oder Umlenkeinheit zugeführt werden kann.

## Beschreibung

Die Erfindung bezieht sich auf ein Verfahren zum Betreiben einer Fördereinrichtung mit in Längsrichtung sowie quer dazu orientierten und durch Umlenkeinheiten miteinander verbundenen ersten und zweiten Lineareinheiten und damit wirkverbundenen Schleppbändern, bei welchem verfahren mittels der Schleppbänder ein oder mehrere Werkstückträger durch geradlinige sowie umlenkende Transportbewegungen mindestens einem der Fördereinrichtung zugeordneten Handarbeitsplatz und/oder mindestens einer Automatikstation zugeführt werden.

Bei der Automation von bestimmten Produktionsabläufen ist es allgemein bekannt, mittels motorisch angetriebener Transfersysteme mehrere Arbeitsstationen derart miteinander zu verbinden, dass auf einem einzelnen Werkstückträger oder mehreren nachlaufenden Werkstückträgern zu bearbeitende Werkstücke angeordnet sind, wobei die einzelnen Werkstückträger mittels damit wirkverbundener Schleppriemen, Rollbahnen oder dergleichen einer einzelnen Arbeitsstation oder mehreren räumlich versetzt zueinander angeordneten Arbeitsstationen zuführbar sind.

Der Erfindung liegt die Aufgabe zugrunde, ein Verfahren sowie eine Fördereinrichtung zur Durchführung des Verfahrens anzugeben, mittels welchem/welcher ein einzelner oder mehrere in Formation zu transportierende Werkstückträger in bezug auf die vorgegebene Transportrichtung in Abhängigkeit des Bestimmungsortes ausgelenkt und wieder eingeführt werden kann.

Das erfindungsgemäss Verfahren ist dadurch gekennzeichnet, dass die in den Lineareinheiten geführten Werkstückträger jeweils mit quer zur Transportrichtung orientierten und parallel zueinander ausgerichteten Seitenkanten sowie mit einer auf die jeweilige Lineareinheit bezogenen, unveränderlichen Kantenorientierung den Umlenkeinheiten zugeführt werden, wobei in der jeweiligen Umlenkeinheit ein oder mehrere Werkstückträger geradlinig weitertransportiert oder in Bezug zu der geradlinigen Transportbewegung unter spitzem Winkel ausgelenkt der nächsten Lineareinheit oder Umlenkeinheit zugeführt werden.

Die erfindungsgemässe Fördereinrichtung ist dadurch gekennzeichnet, dass jede Umlenkeinheit mit Mitteln zum Transportieren und mit Mitteln zum Auslenken der von der jeweiligen Lineareinheit zugeführten Werkstückträger sowie mit einer zum Auslenken oder Weiterführen der Werkstückträger ausgebildeten Führungsplatte versehen ist, welche einen in Längsrichtung orientierten ersten Führungsspalt sowie einen damit in Verbindung stehenden und unter spitzem Winkel dazu angeordneten zweiten Führungsspalt aufweist.

Weitere Merkmale der Erfindung ergeben sich aus der folgenden Beschreibung in Verbindung mit der Zeichnung und den einzelnen Patentansprüchen.

Die Erfindung wird nachstehend anhand der Zeichnung beschrieben. Es zeigt:
**Fig.1** eine in schematischer Draufsicht dargestellte und mehrere Linear- und Umlenkeinheiten umfassende Fördereinrichtung zum Zuführen von Werkstückträgern zu im Abstand zueinander angeordneten Montagestationen und Handarbeitsplätzen;
**Fig.2** ein zweites Ausführungsbeispiel der schematisch und in Draufsicht dargestellten Fördereinrichtung;
**Fig.3** eine in grösserem Massstab und in Schnittansicht gemäss der Linie III-III in Fig.1 dargestellte Lineareinheit für die in Fig.1 und Fig.2 dargestellte Fördereinrichtung;
**Fig.4** die in Fig.1 durch einen Kreis D bezeichnete sowie in grösserem Massstab und in Draufsicht dargestellte Umlenkeinheit für die Fördereinrichtung gemäss Fig.1 oder Fig.2;
**Fig.5** die in Ansicht dargestellte Umlenkeinheit gemäss Pfeilrichtung V in Fig.4;
**Fig.6** die in Fig.1 durch einen Kreis E bezeichnete und in Draufsicht dargestellte Umlenkeinheit mit den entsprechend zugeordneten Lineareinheiten;
**Fig.7** den in grösserem Massstab dargestellten Werkstückträger für die Fördereinrichtung gemäss Fig.1 und Fig.2;
**Fig.8** den in Draufsicht und gemäss der Linie VIII-VIII in Fig.7 im Schnitt dargestellten Werkstückträger;
**Fig.9** ein in Fig.1 durch einen Kreis F bezeichnetes Teilstück der Fördereinrichtung mit in verschiedenen Bewegungsphasen A, B und C dargestellten Werkstückträgern.

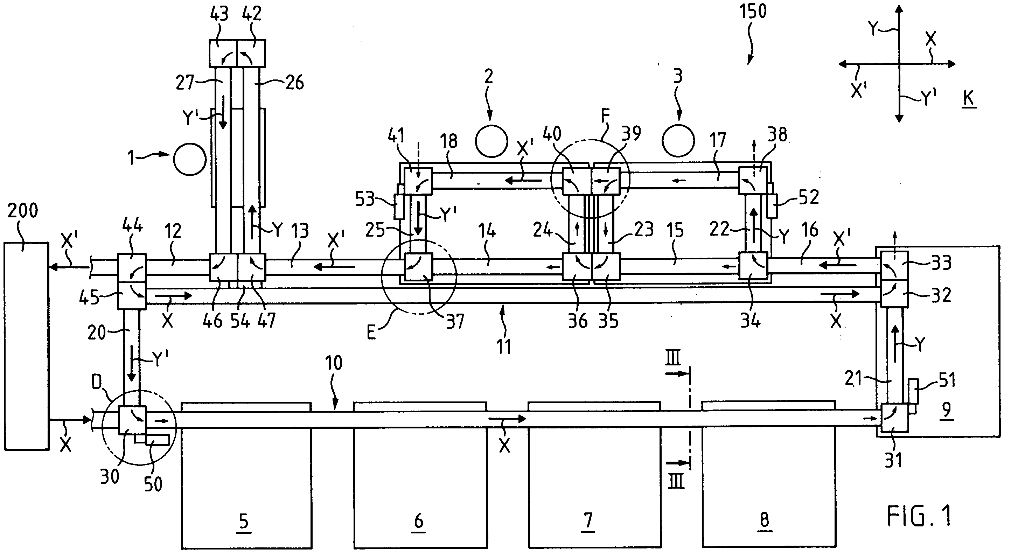

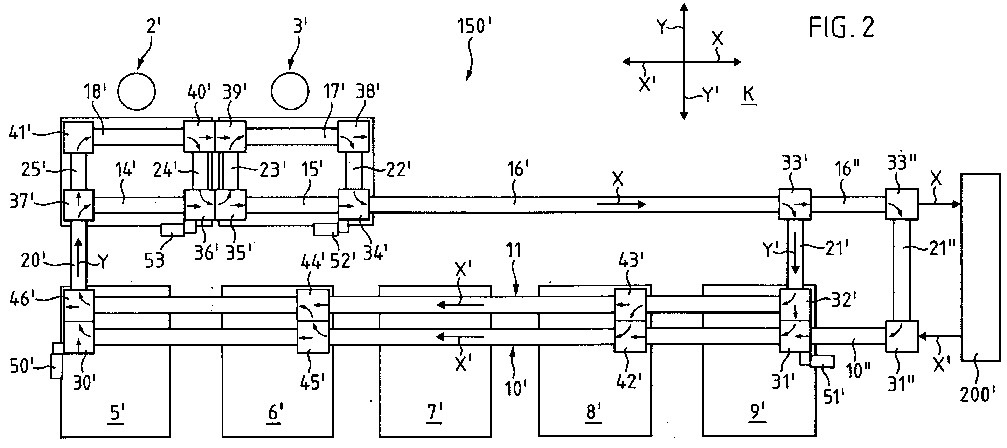

Die Figuren 1 und 2 zeigen je eine in schematischer Draufsicht dargestellte Fördereinrichtung gemäss der Erfindung. Die einzelne Fördereinrichtung umfasst im wesentlichen in Längs- und Querrichtung orientierte Lineareinheiten sowie die einzelnen Lineareinheiten miteinander verbindende Umlenkeinheiten. Den einzelnen Lineareinheiten der jeweiligen Fördereinrichtung können beliebig angeordnet ein oder mehrere Handarbeitsplätze sowie eine oder mehrere automatische Montagestationen zugeordnet werden. Den einzelnen Handarbeitsplätzen sowie den einzelnen automatischen Montagestationen können beispielsweise programmabhängig gesteuert einzelne oder in sogenannter Pulkformation geordnete Werkstückträger zugeführt werden. Die einzelnen Werkstückträger sind dabei in den mit entsprechend ausgebildeten Führungselementen versehenen Linear- und Umlenkeinheiten geführt. Die in Fig.1 und Fig.2 nicht näher dargestellten Werkstückträger sind jeweils zur Aufnahme und Halterung mindestens eines Werkstückes ausgebildet. Die Werkstückträger werden mittels geeigneter und in den Linear- und Umlenkeinheiten angeordneter sowie in Transportrichtung angetriebener Schleppbänder den in Reihe oder versetzt zueinander angeordneten Handarbeitsplätzen oder den automatischen Montagestationen zugeführt, derart, dass an den Werkstücken (nicht dargestellt) weitere Elemente manuell oder automatisch montiert werden können. Die einzelnen Elemente der Fördereinrichtung 150 werden nachstehend beschrieben.

Die in Fig.1 als erstes Ausführungsbeispiel dargestellte Fördereinrichtung 150 umfasst mehrere in Längsrichtung orientierte Lineareinheiten 10, 11, 12, 13, 14, 15, 16, 17 und 18 sowie quer dazu angeordnete Lineareinheiten 20, 21, 22, 23, 24, 25, 26 und 27. Die in Längsrichtung orientierten Lineareinheiten 10 bis 18 sowie die quer dazu angeordneten Lineareinheiten 20 bis 27 sind an den Enden jeweils durch zugeordnete Umlenkeinheiten 30, 31, 32, 33, 34, 35, 36, 37, 38, 39, 40, 41, 42, 43, 44, 45, 46 und 47 miteinander verbunden. Die Lineareinheiten 10 bis 18 und die quer dazu angeordneten Lineareinheiten 20 bis 27 mit den in nicht näher dargestellter Weise damit wirkverbundenen Umlenkeinheiten 30 bis 47 bilden zusammen die in sich geschlossen ausgebildete Fördereinrichtung 150.

Der Fördereinrichtung 150 können zur Automatisierung spezieller Fertigungsabläufe ein oder mehrere Handarbeitsplätze oder eine oder mehrere automatische Montagestationen zugeordnet werden. Für die Automatisierung bestimmter Fertigungsabläufe werden den Handarbeitsplätzen oder den automatischen Montagestationen in Fig.1 nicht dargestellte Werkstückträger zugeführt. Die steuerbare Zuführung der Werkstückträger erfolgt beispielsweise nach einem vorbestimmten Fertigungsprogramm.

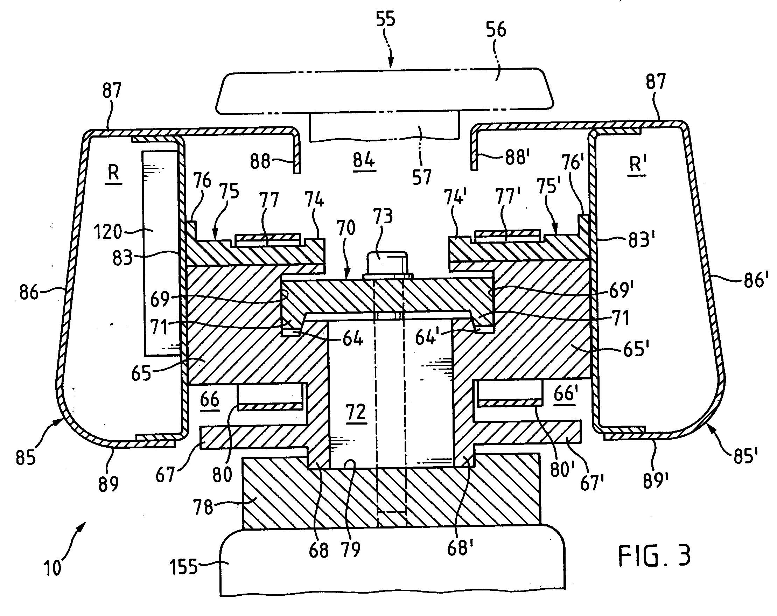

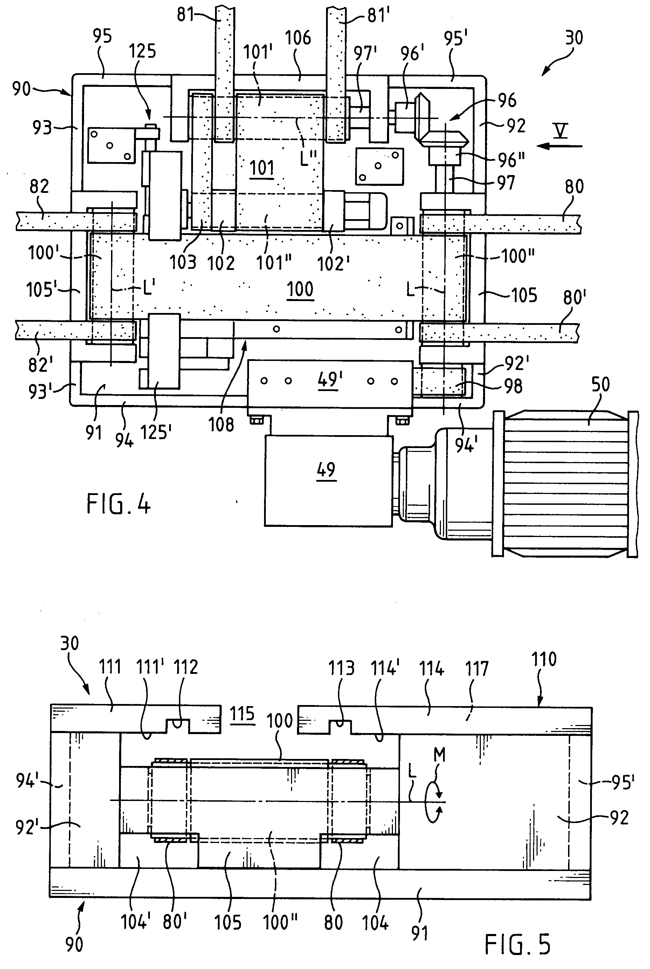

Den in Langsrichtung orientierten Lineareinheiten 10 bis 18 und den quer dazu angeordneten Lineareinheiten 20 bis 27 sowie den Umlenkeinheiten 30 bis 47 sind motorisch angetriebene Schleppbänder (Fig.3) zugeordnet. Mittels der untereinander verbundenen Schleppbänder können die in den Linear- und Umlenkeinheiten geführten und beispielsweise reibschlüssig damit wirkverbundenen Werkstückträger gemäss dem in Fig.1 dargestellten Koordinatensystem K in Pfeilrichtung X und X' sowie in Pfeilrichtung Y und Y' transportiert werden. Im dargestellten Ausführungsbeispiel sind den Umlenkeinheiten 30, 31, 38, 41 und 47 schematisch dargestellte Antriebsaggregate 50, 51, 52, 53 und 54 zugeordnet, mittels welcher die einzelnen Schleppbänder in Pfeilrichtung X,X' und Y,Y' angetrieben werden. Die einzelnen Lineareinheiten 10 bis 27 und Umlenkeinheiten 30 bis 47 sind mit in Bewegungsrichtung der Werkstückträger orientierten, in Fig.1 sowie Fig.2 nicht näher dargestellten Führungen versehen, in welchen die Werkstückträger im wesentlichen zwangsläufig geführt sind. Mittels nicht dargestellter und den Umlenkeinheiten zugeordneter Steuermittel können die einzelnen Werkstückträger für eine Änderung der Bewegungsrichtung ausgelenkt oder aber in der vorgegebenen Transportrichtung weitergeführt werden. Die Steuermittel (Fig.4) sind beispielsweise in den einzelnen Umlenkeinheiten 30 bis 47 integriert angeordnet und werden in Abhängigkeit von einem Bearbeitungsprogramm betätigt.

Die Transportrichtung der einzelnen Werkstückträger ist in den Figuren 1 und 2 mit Pfeilrichtungen X,X' und Y,Y' sowie an den Umlenkeinheiten mit den nicht näher bezeichneten Pfeilrichtungen angegeben.

Bei dem in Fig.1 dargestellten Ausführungsbeispiel sind an der einen Seite der Fördereinrichtung 150 zwei nebeneinander angeordnete und schematisch dargestellte Handarbeitsplätze 2 und 3 sowie ein einzelner, quer dazu angeordneter Handarbeitsplatz 1 vorgesehen. Auf der den beiden Handarbeitsplätzen 2 und 3 gegenüberliegenden Seite sind der in Pfeilrichtung X orientierten Lineareinheit 10 mehrere automatische Montagestationen 5,6,7 und 8 zugeordnet, welche beispielsweise nebeneinander und in Reihe angeordnet sind. An der in Pfeilrichtung Y orientierten Lineareinheit 21 ist weiterhin eine quer zu den Montagestationen 5 bis 8 angeordnete Montagestation 9 vorgesehen.

Bei den schematisch dargestellten Montagestationen 5 bis 9 handelt es sich um sogenannte Automatikstationen, welche von den Lineareinheiten 10 und 21 der Fördereinrichtung 150 in nicht näher dargestellter Weise entfernt und sofern erforderlich untereinander ausgetauscht oder aber beispielsweise durch Handarbeitsplätze oder andere Bearbeitungsstationen ersetzt werden können. Die Fördereinrichtung 150 kann somit ohne besonderen Arbeitsaufwand und ohne zusätzliche Hilfsmittel und Verkabelung in wirtschaftlicher Weise, beispielsweise für eine höhere Ausstossleistung, umgerüstet werden.

Bei dem in Fig.1 dargestellten Ausführungsbeispiel der Fördereinrichtung 150 können die nicht dargestellten Werkstückträger von einer zugeordneten, schematisch dargestellten Anlage 200 gemäss Pfeilrichtung X der Lineareinheit 10 zugeführt und von dieser über die Lineareinheit 21 in Pfeilrichtung Y sowie über die beiden Umlenkeinheiten 33 und 34 beispielsweise den Handarbeitsplätzen 3 und 2 zugeführt werden. Von dem Handarbeitsplatz 2 können die Werkstückträger über die Lineareinheiten 13,25 und 27 dem Handarbeitsplatz 1 oder aber über die Lineareinheiten 13 und 12 in Pfeilrichtung X' wieder der Anlage 200 zugeführt werden. Bei Bedarf und bei entsprechender Stellung der nicht dargestellten und in den Umlenkeinheiten 34,35,36,37 und 47 angeordneten Steuermittel können die Werkstückträger für eine sogenannte Warteposition (Warteschleife) über die Lineareinheiten 16,15,14,13 und 12 sowie den Umlenkeinheiten 34,35,36,37,47,46,44 und 45 der Lineareinheit 11 zugeführt und bei Bedarf über die beiden Umlenkeinheit 32 und 33 wieder dem eigentlichen Transportkreislauf zugeführt werden.

Die in Fig.2 als zweites Ausführungsbeispiel dargestellte Fördereinrichtung 150' mit der Anlage 200' ist im wesentlichen analog der ersten Fördereinrichtung 150 ausgebildet und umfasst in Längsrichtung orientierte und durch Umlenkeinheiten 44', 45' und 42',43' sowie 31',32' unterteilte Lineareinheiten 10',10'' und 11'. In parallelem Abstand dazu sind weitere in Längsrichtung orientierte Lineareinheiten 14',15',16' und 16'' und im Abstand dazu die Lineareinheiten 17',18' angeordnet. Die in Längsrichtung orientierten Lineareinheiten sind durch quer dazu angeordnete Lineareinheiten 20', 21', 21'', 22', 23', 24' und 25' sowie durch Umlenkeinheiten 30',31',31'',32',33',33'',34',35',36',37',38',39' und 40',41', 42', 43',44',45' und 46' miteinander verbunden. Den Umlenkeinheiten 30',31', 34' und 36' sind schematisch dargestellte Antriebsaggregate 50',51',52' und 53' zugeordnet, mittels welcher in den Linear- und Umlenkeinheiten angeordnete Schleppbänder (nicht dargestellt) angetrieben werden.

Bei dem zweiten Ausführungsbeispiel der Fördereinrichtung 150' sind auf der einen Längsseite in Reihe angeordnete Montagestationen 5', 6', 7', 8' sowie 9' und auf der gegenüberliegenden Längsseite zwei Handarbeitsplätze 2' und 3' angeordnet.

Fig.3 zeigt als Ausführungsbeispiel die im Profilquerschnitt gemäss der Linie III-III in Fig.1 dargestellte Lineareinheit 10 und man erkennt zwei im Abstand zueinander angeordnete Trägerelemente 65,65'. Die an einer Auflageschiene 78 angeordneten Trägerelemente 65,65' sind mit angeformten Stegen 68,68' in einer in Längsrichtung der Auflageschiene 78 orientierten Nut 79 angeordnet und befestigt. Zwischen den beiden Trägerelementen 65,65' sind mehrere in nicht näher dargestellter Weise im Abstand zueinander angeordnete Distanzstücke 72 vorgesehen. An den gegenüberliegenden Innenseiten (nicht bezeichnet) der beiden Trägerelemente 65,65' ist je eine in Langsrichtung orientierte erste Ausnehmung 69,69' sowie eine Nut 64,64' vorgesehen. In den Ausnehmungen 69,69' sind mehrere über die gesamte Länge der Lineareinheit 10 im Abstand zueinander angeordnete Spannelemente 70 vorgesehen. Das einzelne Spannelement 70 ist mit seitlich angeformten Stegen 71,71' mit den beiden Nuten 64,64' der Trägerelemente 65,65' formschlüssig verbunden. Die Nuten 64,64' sowie die Stege 71,71' sind vorzugsweise mit korrespondierend zueinander angeordneten, nicht näher bezeichneten schrägen Spannflächen versehen.

Mittels mehrerer in Längsrichtung im Abstand zueinander angeordneter Befestigungsmittel 73, welche je das einzelne Spannelement 70 sowie das einzelne Distanzstück 72 durchdringen und in die Auflageschiene 78 eingeschraubt sind, werden die beiden Trägerelemente 65 und 65' der Lineareinheiten gegeneinander verspannt und auf einem schematisch dargestellten Traggestell 155 befestigt. Die Auflageschiene 78 ist entweder ein Bestandteil des Traggestells 155 oder wird mit nicht dargestellten Mitteln (Schraubverbindung) auf dem Traggestell 155 befestigt.

An der der Auflageschiene 78 zugewandten Seite des einzelnen Trägerelements 65,65' ist jeweils eine zur Führung eines umlaufend angetriebenen Schleppbandes 80 und 80' taschenförmig ausgebildete und in Längsrichtung der Lineareinheit 10 orientierte Ausnehmung 66 und 66' vorgesehen. Die Ausnehmungen 66 und 66' sind auf der der Auflageschiene 78 zugewandten Seite durch einen am Steg 68,68' angeformten Flansch 67 und 67' begrenzt. Die beiden Flanschen 67,67' verhindern somit ein Durchhängen des endlosen Schleppbandes 80,80'. An der nicht näher bezeichneten Oberseite des einzelnen Trägerelements 65,65' ist jeweils eine Gleitschiene 75 und 75' angeordnet und mit nicht dargestellten Mitteln befestigt. Die in Längsrichtung orientierten Gleitschienen 75,75' sind jeweils mit einem ersten äusseren Steg 76,76' mit einer Führungsnut 77,77' sowie mit einem zweiten inneren Steg 74,74' versehen. Das Schleppband 80 und 80' ist jeweils zwischen den beiden Stegen 74,76 in der Führungsnut 77 beziehungsweise zwischen den beiden Stegen 74',76' in der Führungsnut 77' angeordnet und geführt. Mittels der beiden umlaufend angetriebenen Schleppbänder 80 und 80' wird der in Fig.3 teilweise und schematisch dargestellte Werkstückträger 55 in Längs- und Querrichtung der Fördereinrichtung 150 oder 150' (Fig.1 und Fig.2) in Pfeilrichtung X und X' sowie Y und Y' transportiert.

Seitlich an den beiden Trägerelementen 65 und 65' ist je mindestens ein in Längsrichtung der Lineareinheit 10 orientiertes Haltestück 83 und 83' mit nicht dargestellten Mitteln abnehmbar befestigt. An den im Profilquerschnitt [-förmig ausgebildeten Haltestücken 83,83' ist je eine aus Teilstücken 86,86'; 87,87'; 88,88' und 89,89' gebildete Verkleidung 85,85' angeordnet und befestigt. Die beiden mit angeformten Stegen 88, 88' versehenen Teilstücke 87, 87' der Verkleidungen 85 und 85' sind durch einen Spalt 84 im Abstand zueinander angeordnet. Der in Längsrichtung zwischen den Stegen 74,76 und 74',76' der Gleitschienen 75,75' geführte Werkstückträger 55 durchdringt mit einem Zylinderkörper 57 den zwischen den beiden Verkleidungen 85,85' vorgesehenen Spalt 84, derart, dass eine am Zylinderkörper 57 befestigte Aufnahmeplatte 56 oberhalb der Verkleidungsstücke 87,87' angeordnet ist (Fig.3).

Die beiden Verkleidungen 85,85' sind beispielsweise mit einem sogenannten Schnellverschluss (nicht dargestellt) an den Haltestücken 83,83' befestigt. Der mit R und R' bezeichnete Raum zwischen den Haltestücken 83,83' und der zugeordneten Verkleidung 85 und 85' dient vorzugsweise als Kabelkanal sowie zur Aufnahme von Überwachungssensoren 120, welche, wie in Fig.3 beispielsweise dargestellt, an den Haltestücken 83,83' befestigt werden können.

An dieser Stelle wird darauf hingewiesen, dass die einzelnen Lineareinheiten für die beiden Fördereinrichtungen 150 (Fig.1) sowie 150' (Fig.2), wie in Fig.3 dargestellt, im Profilquerschnitt analog ausgebildet sind. Die Lineareinheiten sind lediglich in ihrer Länge der herzustellenden Fördereinrichtung 150 und 150' anzupassen und an den jeweiligen Umlenkstellen mit den Umlenkeinheiten zu verbinden sowie auf einem entsprechenden Traggestell zu befestigen. Mittels der erfindungsgemässen Linear- und Umlenkeinheiten können somit individuelle und den jeweiligen Anforderungen angepasste und im wesentlichen als Baukastensystem ausgebildete Fördereinrichtungen zusammengesetzt werden.

Fig.4 zeigt die in Fig.1 durch einen Kreis D bezeichnete und in Draufsicht dargestellte Umlenkeinheit 30. Die Umlenkeinheit 30 umfasst im wesentlichen ein aus einer Grundplatte 91 sowie aus einer Stirnwand 92,92', einer Rückwand 93,93' sowie aus gegenüberliegenden Seitenwänden 94,94' und 95,95' gebildetes Gehäuse 90. Bei dem dargestellten Ausführungsbeispiel ist zwischen den beiden Wandteilstücken 92,92' und 93,93' sowie 95,95' jeweils ein Lagerbock 105 und 105' beziehungsweise 106 angeordnet und mit nicht dargestellten Mitteln auf der Grundplatte 91 befestigt. An der einen Seitenwand 94,94' ist ein mit einem schematisch dargestellten Umlenkgetriebe 49,49' in Wirkverbindung stehendes Antriebsaggregat 50 angeordnet und mit nicht näher dargestellten Mitteln befestigt.

In den Seitenteilen der beiden gegenüberliegend im Abstand zueinander angeordneten Lagerböcke 105, 105' ist jeweils eine nicht näher dargestellte und mit einer Aussenverzahnung versehene Walze 100', 100'' gelagert. Die beiden um ihre Längsachse L in Pfeilrichtung M (Fig. 5) angetriebenen Walzen 100',100'' sind über einen mit einer nicht dargestellten Innenverzahnung versehenen Antriebsriemen 100 miteinander wirkverbunden. Der Antriebsriemen 100 ist zur Vermeidung des Durchhängens vorzugsweise auf einer entsprechend zugeordneten Gleitbrücke 108 gleitend geführt. Auf den beiden Walzen 100',100'' ist zu beiden Seiten des Antriebsriemens 100 jeweils ein mit einer Innenverzahnung (nicht dargestellt) versehenes Schleppband 80,80' beziehungsweise 82,82' angeordnet.

In den Seitenteilen des in der einen Seitenwand 95,95' angeordneten Lagerbocks 106 sowie in einem im Abstand dazu angeordneten Lager 102 und 102' ist je eine nicht näher dargestellte und mit einer Aussenverzahnung versehene Walze 101', 101'' gelagert. Die beiden Walzen 101', 101'' sind über einen mit einer Innenverzahnung versehenen Antriebsriemen 101 sowie über einen mit einer Innenverzahnung versehenen Antriebsriemen 103 miteinander wirkverbunden. Weiterhin sind zu beiden Seiten des Antriebsriemens 101 zwei mit der verzahnten Walze 101' in Wirkverbindung stehende und je mit einer Innenverzahnung versehene Schleppbänder 81,81' angeordnet.

Die in Fig.4 schematisch dargestellten und mit den Walzen 100',100'' sowie 101' wirkverbundenen, endlosen Schleppbänder 80,80' und 81,81' sowie 82,82' sind in Längsrichtung durch die zugeordneten Lineareinheiten hindurchgeführt (Fig. 3) und umschlingen mit dem anderen Ende die in der zugeordneten Umlenkeinheit angeordneten Walzen. Der Antrieb der einzelnen Schleppbänder 80,80'; 81,81'; 82,82' wird von dem Antriebsaggregat 50 über ein schematisch dargestelltes Umlenkgetriebe 49,49' und über einen Antriebsriemen 98 auf die mit dem Antriebsriemen 100 wirkverbundene Walze 100'' sowie über eine damit verbundene Welle 97 auf ein mit zwei Kegelrädern 96',96'' versehenes Kegelradgetriebe 96 und von diesem über eine Welle 97' auf die mit dem Antriebsriemen 101 wirkverbundene Walze 101' übertragen.

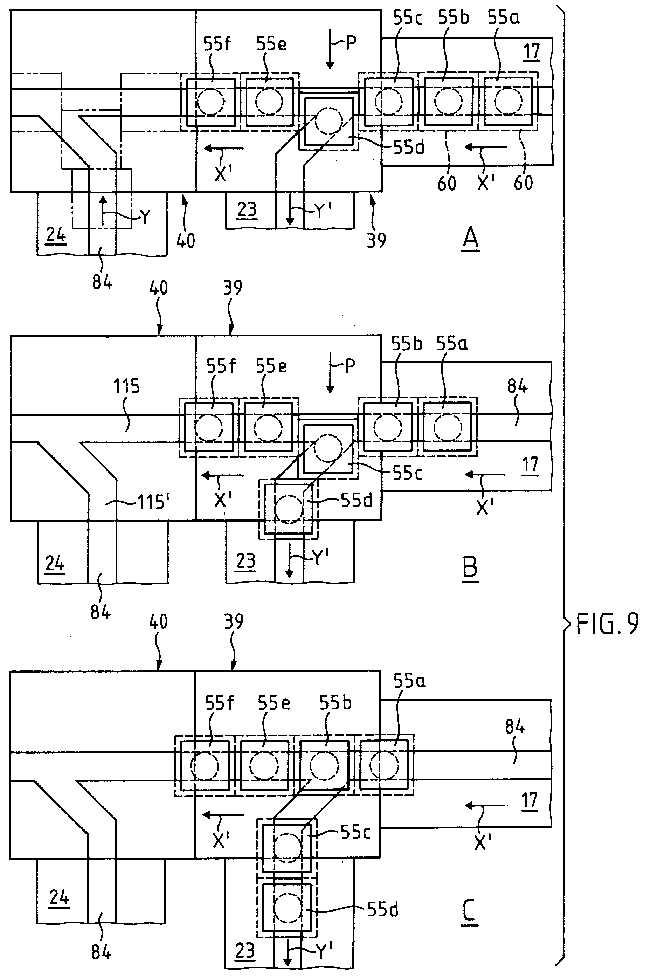

In Fig.4 erkennt man weiterhin einen schematisch dargestellten und beispielsweise pneumatisch betätigbaren Steuerschieber 125,125', mittels welchem die der jeweiligen Umlenkeinheit zugeführten Werkstückträger beispielsweise programmabhängig in eine andere Richtung gelenkt werden können. Das Auslenken der Werkstückträger wird später in Verbindung mit Fig.9 beschrieben.

An dieser Stelle wird darauf hingewiesen, dass die einzelnen Umlenkeinheiten 30 bis 47 entweder mit einem Antriebsaggregat 50 bis 54 zum Antreiben der in den Lineareinheiten angeordneten Schleppbänder beziehungsweise in den Umlenkeinheiten angeordneten Antriebsriemen oder aber ausschliesslich als Umlenkeinheiten (ohne Antriebsaggregat) ausgebildet sind. Der konstruktive Aufbau der einzelnen Umlenkeinheiten ist jedoch im wesentlichen miteinander identisch.

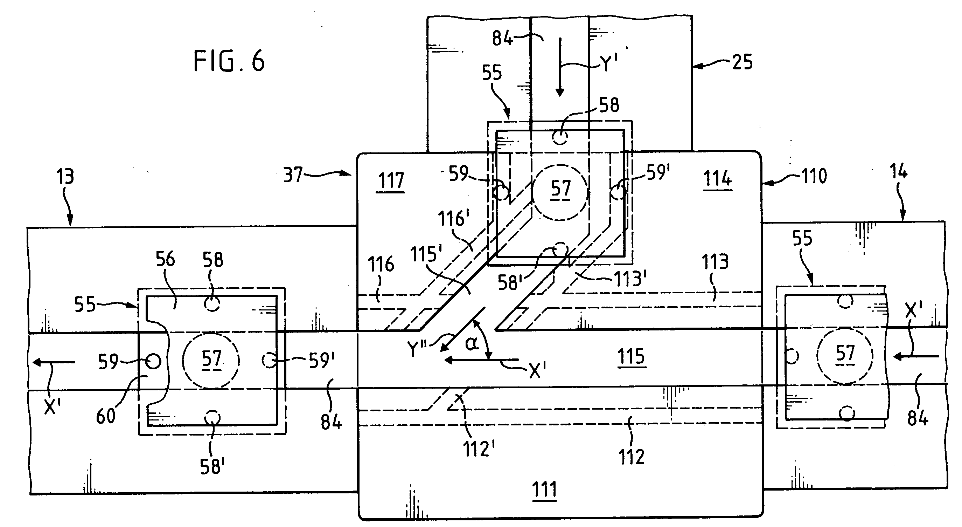

Fig.5 zeigt die gemäss Pfeilrichtung V in Fig.4 in Ansicht dargestellte Umlenkeinrichtung 30 und man erkennt das Gehäuse 90 mit den beiden auf der Grundplatte 91 angeordneten Stirnwänden 92,92' sowie den dazwischen angeordneten Lagerbock 105. Der Lagerbock 105 ist mit im Abstand zueinander angeordneten Ausnehmungen 104,104' versehen, durch welche die seitlich neben dem Antriebsriemen 100 angeordneten und mit der Antriebswalze 100'' wirkverbundenen Schleppbänder 80 und 80' hindurchgeführt werden. Weiterhin erkennt man eine das Gehäuse 90 weitgehend verschliessende Abdeckplatte 110, welche beispielsweise in mehrere, an den Seiten- und Rückenwänden 92,92'; 93,93';94,94' und 95,95' des Gehäuses 90 befestigte Plattenteilstücke 111, 114 und 117 unterteilt ist. In Fig.5 sind die beiden durch einen Führungsspalt 115 voneinander getrennten Plattenteilstücke 111 und 114 dargestellt. An der Innenseite 111',114' der Plattenteilstücke 111, 114 sind entsprechend ausgebildete und angeordnete Führungsnuten 112 und 113 vorgesehen. Die Plattenteilstücke 111,114 und 117 mit den innenseitig angeordneten Führungsnuten und ihre Funktionen werden nachstehend in Verbindung mit Fig.6 noch beschrieben.

Fig.6 zeigt die in Fig.1 durch einen Kreis E bezeichnete Umlenkeinheit 37 mit den zugeordneten und in nicht näher dargestellter Weise daran angeschlossenen und jeweils mit einem einheitlich mit 84 bezeichneten Spalt versehenen Lineareinheiten 14,13 und 25. Weiterhin erkennt man den auf der einen Seite der Umlenkeinheit teilweise dargestellten und mit dem Zylinderkörper 57 im Spalt 84 der Lineareinheit 14 angeordneten und mit korrespondierend zueinander angeordneten Führungsrollen 58,58' und 59,59' versehenen Werkstückträger 55. Beim Transport in Pfeilrichtung X' wird der Werkstückträger 55 mit den Führungsrollen 58,58' in den an der Innenseite der auf der Umlenkeinheit 37 angeordneten und befestigten Abdeckplatte 110 angeordneten Führungsnuten 112,113 beziehungsweise 112, 116 geführt. Beim Verlassen der Umlenkeinheit 37 gelangen die Führungsrollen 58,58' ausser Eingriff der Führungsnuten 112,116, so dass der Werkstückträger 55, wie in Fig.3 dargestellt, mit der Gleitplatte 60 im wesentlichen zwischen den seitlichen Stegen 74,76 und 74',76' der beiden Gleitschienen 75,75' der Lineareinheit 13 geführt wird.

Beim Transport in Pfeilrichtung Y', bei welchem der Werkstückträger 55, wie in Fig.6 schematisch dargestellt, von der Lineareinheit 25 der Umlenkeinheit 37 zugeführt wird, sind die einen korrespondierenden Führungsrollen 59,59' mit den Führungsnuten 113' und 116' der beiden Plattenteilstücke 114,117 in Eingriff. Bei weiterem Transport in Pfeilrichtung Y' gelangen die anderen korrespondierenden Führungsrollen 58,58' mit den Führungsnuten 116 und 112 in Eingriff, so dass der Werkstückträger 55 anschliessend in Pfeilrichtung X' transportiert wird.

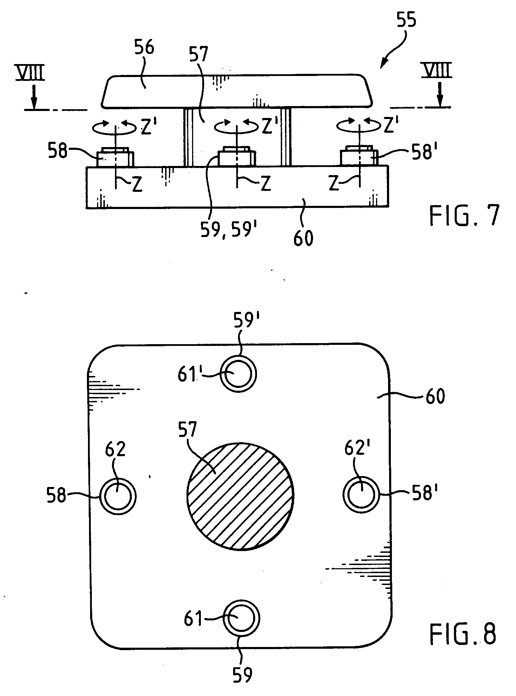

Fig.7 zeigt den in grösserem Massstab dargestellten Werkstückträger 55, welcher im wesentlichen eine Gleitplatte 60, den daran angeordneten Zylinderkörper 57 sowie eine am Zylinderkörper 57 gelagerte und daran in nicht näher dargestellter Weise befestigte Aufnahmeplatte 56 umfasst. Die beispielsweise quadratisch ausgebildete Aufnahmeplatte 56 dient zur Befestigung der zu montierenden, produktespezifischen Werkzeuge. Die Gleitplatte 60 ist vorzugweise in den äusseren Abmessungen grösser als die auf dem Zylinderkörper 57 befestigte Aufnahmeplatte 56 ausgebildet. An der Gleitplatte 60 sind die korrespondierend und in gleichen Abständen zueinander angeordneten Führungsrollen 58,58' und 59,59' vorgesehen, welche jeweils um eine generell mit Z bezeichnete Achse eines an der Gleitplatte 60 befestigten Lagerzapfens 61,61' und 62,62' gelagert sind. Die Lagerzapfen 61,61' und 62,62' sind beispielsweise aus geeignetem Kunststoff und die Führungsrollen 58,58' und 59,59' als Stahlhülse ausgebildet. Die an den Zapfen 61,61' und 62,62' gelagerten Führungsrollen 58,58' und 59,59' sind um die Achse Z des jeweiligen Zapfens in Pfeilrichtung Z' drehbar. Mittels des Zylinderkörpers 57 und der Führungsrollen 58,58' und 59,59' wird im wesentlichen ein Auslenken des Werkzeugträgers erreicht, wobei jedoch auch die Möglichkeit besteht, dass das Auslenken ausschliesslich mittels des Zylinderkörpers 57 erfolgt, so dass die Führungsrollen 58,58' und 59,59' nur noch zur Sicherung gegen Verdrehung dienen.

Fig.8 zeigt einen Schnitt gemäss der Linie VIII-VIII in Fig.7 und man erkennt den Zylinderkörper 57 sowie die symmetrisch verteilt an der Gleitplatte 60 angeordneten Lagerzapfen 61, 61' und 62,62' für die Führungsrollen 59,59' und 58,58'. Die Gleitplatte 60 ist beispielsweise aus geeignetem Kunststoff hergestellt und mit nicht näher dargestellten Ausnehmungen zur Aufnahme von kodierbaren Stopp- und Positioniersensoren (nicht dargestellt) versehen.

In Fig.9 ist als Ausführungsbeispiel ein in Fig.1 durch einen Kreis F bezeichnetes und in grösserem Massstab dargestelltes Teilstück der Fördereinrichtung 150 mit einer Anzahl in verschiedenen Bewegungsphasen A, B und C dargestellten Werkstückträgern 55a,55b,55c,55d,55e und 55f dargestellt. Es besteht jedoch auch die Möglichkeit eine unbestimmte Anzahl Werkstückträger 55 in sogenannter Pulkformation zu transportieren. Die einzelnen Bewegungsphasen werden nachstehend beschrieben:
Ausgehend von der Bewegungsphase A werden die einzelnen Werkstückträger 55a bis 55f mittels der in der Lineareinheit 17 angeordneten Schleppbänder (nicht dargestellt) in Pfeilrichtung X' transportiert und der Umlenkeinheit 39 zugeführt. Bei dem Transport kontaktieren sich lediglich die einander zugewandten nicht näher bezeichneten Seitenkanten der im Innenraum der jeweiligen Lineareinheit angeordneten Gleitplatten 60 der einzelnen Werkstückträger. Die Gleitplatten sind mit den in Pfeilrichtung X' angetriebenen endlosen Schleppbändern beispielsweise reibschlüssig verbunden. Sobald die Werkstückträger 55a bis 55f die Umlenkeinheit 39 erreicht haben, besteht nunmehr die Möglichkeit, beispielsweise den einen oder anderen Werkstückträger entsprechend auszulenken und der Lineareinheit 23 in Pfeilrichtung Y' zuzuführen. Bei dem dargestellten Ausführungsbeispiel wurde mittels einem in der Umlenkeinheit 39 angeordneten Steuerschieber (nicht dargestellt) eine in Pfeilrichtung P orientierte Kraft auf den Werkstückträger 55d ausgeübt, so dass dieser entsprechend ausgelenkt und der Lineareinheit 23 zugeführt wurde. Die spezielle Anordnung der Führungsnuten (Fig.6) in der Abdeckplatte und die zwangsläufig darin gleitenden Führungsrollen bewirken, dass der Werkstückträger 55d, wie in der Bewegungsphase A dargestellt, unter Beibehaltung parallel zueinander angeordneter Kantenorientierung der jeweiligen Aufnahmeplatten 56 und Gleitplatten 60 im wesentlichen quer zu den in Pfeilrichtung X' bewegten Werkstückträgern 55e und 55f ausgelenkt wird.

Bei der Bewegungsphase B ist zusätzlich der Werkstückträger 55c durch die in Pfeilrichtung P orientierte Kraft des Steuerschiebers (nicht dargestellt) ausgelenkt, und man erkennt den teilweise mit der Umlenkeinheit 39 und der Lineareinheit 23 in Wirkverbindung stehenden Werkstückträger 55d.

Bei der Bewegungsphase C ist der Auslenkvorgang der einzelnen Werkstückträger abgeschlossen, und man erkennt die in Pfeilrichtung X' zu transportierenden Werkstückträger 55a,55b,55e und 55f sowie die ausgelenkten Werkstückträger 55c und 55d.

Aus den vorstehend beschriebenen Bewegungsphasen A,B und C ist erkennbar, dass die Werkstückträger 55a bis 55f jeweils mit quer zu der hier mit X' bezeichneten Transportrichtung und parallel zueinander orientierten Seitenkanten (nicht bezeichnet) sowie mit einer auf die jeweilige Lineareinheit 17 bezogenen unveränderlichen Kantenorientierung der Umlenkeinheiten 39 und 40 zugeführt werden. In Abhängigkeit des Bestimmungsortes werden im dargestellten Ausführungsbeispiel die beiden Werkstückträger 55e und 55f geradlinig der zugeordneten Umlenkeinheit 40 oder einer nicht dargestellten Lineareinheit zugeführt oder relativ zu der geradlinigen Transportbewegung in der Umlenkeinheit 39 mit nicht dargestellten Mitteln unter spitzem Winkel α in Pfeilrichtung P ausgelenkt und der quer zur Lineareinheit 17 angeordneten Lineareinheit 23 zugeführt. Der vorstehend erwähnte Winkel α liegt etwa in der Grössenordnung von 45°.

Bei den vorstehend in Verbindung mit den einzelnen Linear- und Umlenkeinheiten beschriebenen Fördereinrichtungen 150 und 150' (Fig.1,2) können die einzelnen Werkstückträger 55 im wesentlichen ohne zusätzliche Hilfsmittel ausgelenkt und in eine andere Richtung weiter transportiert werden. Der eigentliche Bewegungsfluss der Werkstückträger 55 wird bei dieser Auslenkung nicht unterbrochen, wobei die Auslenkung der Werkstückträger 55 auch dann noch möglich ist, wenn vor einer Auslenkstelle ein durch eine Anzahl von Werkstückträgern 55 gebildeter Pulk entstanden ist. Sofern es erforderlich ist besteht jedoch auch die Möglichkeit, die pulkartige Ansammlung der Werkstückträger 55 mit zusätzlichen, nicht dargestellten Mitteln entsprechend zu vereinzeln.

Bei einer weiteren Variante der Werkstückträger 55 sind diese mit entsprechenden Datenspeichern (nicht dargestellt) versehen, mittels welcher die einzelnen Werkstückträger 55 entsprechend programmgesteuert ausgelenkt werden können. Die programmgesteuerte Auslenkung der einzelnen Werkstückträger 55 erfolgt hierbei vorzugsweise in Abhängigkeit des jeweiligen Bestimmungsortes, beispielsweise auf den Bestimmungsort der einzelnen Handarbeitsplätze 1 bis 3 (Fig.1,2) und/oder auf den Bestimmungsort der einzelnen automatischen Montagestationen 5 bis 9.

Wie bereits vorstehend erwähnt, erfolgt der eigentliche Bewegungsfluss der Werkstückträger 55 beim richtungsändernden Auslenken derselben weitgehend ohne jegliche Unterbrechung. Es besteht jedoch auch die Möglichkeit, durch zusätzliche Steuerschieber (nicht dargestellt) im Bereich der jeweiligen Umlenkstelle eine den Bewegungsfluss optimierende Vereinzelung der Werkstückträger 55 vorzunehmen. Eine Vereinzelung, insbesondere eine serielle Vereinzelung der Werkstückträger 55 kann bei dem sogenannten Einschleusen des einzelnen oder der einzelnen Werkstückträger 55 Anwendung finden.

Ein Einschleusvorgang ist beispielsweise in Fig.6 dargestellt, bei welchem Vorgang der oder die in Pfeilrichtung Y', Y'' transportierte/n Werkstückträger 55 den etwa quer dazu in Pfeilrichtung X' transportierten Werkstückträgern 55 zugeführt (eingeschleust) und anschliessend in Pfeilrichtung X' weitertransportiert wird/werden. Die nicht dargestellten Steuerschieber können mit Mitteln versehen werden, durch welche in Abhängigkeit der Anzahl der Werkstückträger 55 diese zur Vermeidung einer Kollision vereinzelt, vorzugsweise seriell vereinzelt werden.

Bei den vorstehend beschriebenen Transportbewegungen in Pfeilrichtung X' und etwa quer dazu in Pfeilrichtung Y' haben die einzelnen Werkstückträger 55 stets eine unveränderliche Kantenorientierung. Die mittels der Umlenkeinheiten in bezug auf eine Gerade unter einem Winkel α im wesentlichen schräg dazu ausgelenkten Werkstückträger 55 haben bei den Transportbewegungen stets die gleiche Geschwindigkeit. Die Kombination und Verbindung von einer oder mehrerer Umlenkeinheiten ermöglicht in vorteilhafter Weise eine beliebige Ausgestaltung des Umlenkbereichs (Umlenkstelle) der jeweiligen Fördereinrichtung 150 oder 150'.

Die einzelnen Elemente der Fördereinrichtungen 150 oder 150' sind zudem derart ausgebildet, dass ein unbeabsichtigtes Berühren der Schleppbänder in den einzelnen Lineareinheiten beziehungsweise der Antriebsriemen in den einzelnen Umlenkeinheiten weitgehend ausgeschlossen ist. Die erforderlichen Sicherheitsbedürfnisse der Fördereinrichtungen 150 beziehungsweise 150' sind somit ebenfalls gewährleistet.

An dieser Stelle wird darauf hingewiesen, dass zur besseren Unterscheidung die in Pfeilrichtung X und X' orientierten Lineareinheiten 10 bis 18 als erste Lineareinheiten und die quer dazu angeordneten und in Pfeilrichtung Y und Y' orientierten Lineareinheiten 20 bis 27 als zweite Lineareinheiten bezeichnet sind. Die Bezeichnung erste und zweite Lineareinheiten ist für das Ausführungsbeispiel der Fördereinrichtung 150' gemäss Fig.2 analog zu verwenden.

## Patentansprüche

1. Verfahren zum Betreiben einer Fördereinrichtung (150) mit in Längs- und Querrichtung orientierten und durch Umlenkeinheiten miteinander verbundenen ersten und zweiten Lineareinheiten (10 bis 27) und damit wirkverbundenen Schleppbändern, bei welchem Verfahren mittels der Schleppbänder ein oder mehrere Werkstückträger (55a bis 55f) durch geradlinige sowie umlenkende Transportbewegungen mindestens einem zugeordneten Handarbeitsplatz (1 bis 3) und/oder mindestens einer zugeordneten Automatikstation (5 bis 9) zugeführt werden, dadurch gekennzeichnet, dass die in den Lineareinheiten geführten Werkstückträger (55a bis 55f) jeweils mit quer zur Transportrichtung orientierten und parallel zueinander ausgerichteten Seitenkanten sowie mit einer auf die jeweilige Lineareinheit (10 bis 27) bezogenen, unveränderlichen Kantenorientierung den Umlenkeinheiten (30 bis 47) zugeführt werden, wobei in der jeweiligen Umlenkeinheit ein oder mehrere Werkstückträger (55a bis 55f) geradlinig weitertransportiert oder in bezug zu der geradlinigen Transportbewegung unter spitzem Winkel (α) ausgelenkt der nächsten Lineareinheit oder Umlenkeinheit zugeführt werden.

2. Verfahren nach Anspruch 1, dadurch gekennzeichnet, dass die in den ersten Lineareinheiten (10 bis 18) und quer dazu angeordneten zweiten Lineareinheiten (20 bis 27) geführten Werkstückträger (55a bis 55f) beim Erreichen der jeweiligen Umlenkeinheit (30 bis 47) in Abhängigkeit des Bestimmungsortes programmgesteuert, unter Beibehaltung parallel zu einander ausgerichteter Werkstückträger-Seitenkanten ausgelenkt und der nächsten, zugeordneten Linear- oder Umlenkeinheit zugeführt werden.

3. Verfahren nach den Ansprüchen 1 und 2, dadurch gekennzeichnet, dass die einzelnen Werkstückträger (55a bis 55f) mittels einem daran angeordneten Zylinderkörper (57) in einem in der Umlenkeinheit (30 bis 47) vorgesehenen geradlinigen sowie unter spitzen Winkel (α) dazu angeordneten Führungsspalt (115,115') bei der Transportbewegung geführt werden.

4. Verfahren nach Anspruch 3, dadurch gekennzeichnet, dass die jeweils mit dem Zylinderkörper (57) in dem geradlinigen sowie in dem unter spitzem Winkel (α) dazu angeordneten Führungsspalt (115,115') geführten Werkstückträger (55a bis 55f) zusätzlich mittels daran angeordneter Führungsrollen (58,58' und 59,59') in beidseitig und parallel zu den Führungsspalten (115,115') angeordneten Nuten (112,112';113,113';116,116') geführt werden.

5. Verfahren nach den Ansprüchen 1 bis 4, dadurch gekennzeichnet, dass die in der jeweiligen Umlenkeinheit (30 bis 47) geradlinig geführten sowie in bezug dazu unter spitzem Winkel (α) ausgelenkt geführten Werkstückträger (55a bis 55f) mittels richtungsabhängig angeordneter Antriebsmittel unter Beibehaltung gleicher Geschwindigkeit transportiert werden.

6. Fördereinrichtung zur Durchführung des Verfahrens nach Anspruch 1, mit in Längs- und Querrichtung orientierten und durch Umlenkeinheiten (30 bis 47) miteinander verbundenen ersten und zweiten Lineareinheiten (10 bis 27) sowie damit wirkverbundenen Schleppbändern, mittels welcher ein oder mehrere Werkstückträger (55a bis 55f) durch geradlinige sowie umlenkende Transportbewegungen mindestens einem zugeordneten Handarbeitsplatz (1 bis 3) oder mindestens einer Automatikstation (5 bis 9) zuführbar sind, dadurch gekennzeichnet, dass jede Umlenkeinheit (30 bis 47) mit Mitteln zum Transportieren und mit Mitteln zum Auslenken der von der jeweiligen Lineareinheit zugeführten Werkstückträger (55a bis 55f) sowie mit einer zum Auslenken oder Weiterführen der Werkstückträger (55a bis 55f) ausgebildeten Führungsplatte (110) versehen ist, welche einen in Längsrichtung orientierten ersten Führungsspalt (115) sowie einen damit in Verbindung stehenden und im spitzen Winkel (α) dazu angeordneten zweiten Führungsspalt (115') aufweist.

7. Fördereinrichtung nach Anspruch 6, dadurch gekennzeichnet, dass die Führungsplatte (110) an der dem Innenraum der einzelnen Umlenkeinheit (30 bis 47) zugewandten Seite zur Führung der Werkstückträger (55a bis 55f) mit in parallelem Abstand zu den beiden in Transportrichtung orientierten Führungsspalten (115,115') angeordnete Führungsnuten (112,112'; 113,113';116,116') aufweist.

8. Fördereinrichtung nach den Ansprüchen 6 und 7, dadurch gekennzeichnet, dass der einzelne Werkstückträger (55a bis 55f) eine Aufnahmeplatte (56) sowie eine durch einen Zylinderkörper (57) im Abstand dazu angeordnete Gleitplatte (60) umfasst, und dass an der Gleitplatte (60) im Abstand zueinander angeordnete und mit den Führungsnuten (112,112';113,113'; 116,116') der Führungsplatte (110) in Eingriff bringbare und jeweils um ihre Achse (Z) drehbar gelagerte Führungsrollen (58,58' und 59,59') angeordnet sind.

9. Fördereinrichtung nach Anspruch 6, dadurch gekennzeichnet, dass in jeder Umlenkeinheit (30 bis 47) ein mit im Abstand zueinander angeordneten Antriebswalzen (100',100'') wirkverbundener erster Antriebsriemen (100) und ein ebenfalls mit im Abstand zueinander angeordneten Antriebswalzen (101', 101'') wirkverbundener zweiter Antriebsriemen angeordnet ist, wobei der erste Antriebsriemen (100) dem ersten Führungsspalt (115) und der zweite Antriebsriemen (101) dem zweiten Führungsspalt (115') korrespondierend zugeordnet ist.

10. Fördereinrichtung nach Anspruch 9, dadurch gekennzeichnet, dass mindestens zwei der in der Umlenkeinheit (30 bis 47) gelagerten und quer zueinander angeordneten Antriebswalzen (100'';101') über ein angetriebenes Kegelradgetriebe miteinander wirkverbunden sind.

11. Fördereinrichtung nach Anspruch 6, dadurch gekennzeichnet, dass zum Auslenken des einzelnen Werkstückträgers (55a bis 55f) in jeder Umlenkeinheit (30 bis 47) ein quer zum ersten Führungsspalt (115) angeordneter und in bezug auf den Bestimmungsort programmabhängig betätigbarer Steuerschieber (125,125') angeordnet ist.

12. Fördereinrichtung nach den Ansprüchen 6 und 8, dadurch gekennzeichnet, dass die einzelne Lineareinheit (10 bis 27) zwei in Längsrichtung orientierte und in parallelem Abstand zueinander angeordnete Trägerelemente (65, 65') sowie daran befestigte und zur Führung der Werkstückträger (55a bis 55f) und der Schleppbänder ausgebildete Gleitschienen (75,75') umfasst, und dass jede Lineareinheit (10 bis 27) durch an den Trägerelementen (65,65') befestigte Verkleidungen (85,85') gegen äusseren Eingriff geschützt ist, wobei die beiden Verkleidungen (85,85') im oberen Bereich zur Durchführung des Zylinderkörpers (57) des einzelnen Werkstückträgers (55a bis 55f) durch einen in Längsrichtung orientierten Spalt (84) im Abstand zueinander angeordnet sind.
